Europäisches Patentamt

(19) European Patent Office

Office européen des brevets

(11) EP 0 722 654 B1

## (12) EUROPÄISCHE PATENTSCHRIFT

(45) Veröffentlichungstag und Bekanntmachung des Hinweises auf die Patenterteilung:
**12.04.2000 Patentblatt 2000/15**

(51) Int Cl.⁷: **A01D 34/86**

(21) Anmeldenummer: **96100849.7**

(22) Anmeldetag: **22.01.1996**

(54) **Fahrbares Ausleger-Arbeitsgerät für Unterhaltungsarbeiten im Strassenbereich**

Boom mounted treatment apparatus for roadside maintenance

Appareil de traitement à bras porteur pour l'entretien des accotements routiers

(84) Benannte Vertragsstaaten:
**AT CH DE FR LI**

(30) Priorität: **23.01.1995 DE 19501903**

(43) Veröffentlichungstag der Anmeldung:
**24.07.1996 Patentblatt 1996/30**

(73) Patentinhaber: **MULAG-FAHRZEUGWERK Heinz Wössner GmbH & CO KG**
**D-77740 Bad Peterstal-Griesbach (DE)**

(72) Erfinder:
• **Wössner, Werner, Dipl.-Ing.**
  **D-77740 Bad Peterstal-Grb. (DE)**

• **Müller, Alfred**
  **D-77728 Oppenau-Löcherberg (DE)**

(74) Vertreter: **Vogeser, Werner, Dipl.-Ing. et al**
**Patent- und Rechtsanwälte**
**Hansmann, Vogeser, Dr. Boecker,**
**Alber, Dr. Strych, Liedl**
**Albert-Rosshaupter-Strasse 65**
**81369 München (DE)**

(56) Entgegenhaltungen:
| | |
|---|---|
| **EP-A- 0 664 076** | **WO-A-92/11750** |
| **CH-A- 570 751** | **DE-U- 9 400 992** |
| **FR-A- 2 642 797** | **GB-A- 2 129 265** |
| **GB-A- 2 202 122** | **US-A- 3 949 539** |

**Beschreibung**

Die Erfindung betrifft ein fahrbares Ausleger-Arbeitsgerät für Unterhaltungsarbeiten im Straßenbereich, insbesondere Ausleger-Mähgerät mit einer Vorrichtung zur Ausleger-Entlastungsregelung entsprechend Änderungen des vom Arbeitskopf, insbesondere Mähkopf angetroffenen Widerstandes in Abhängigkeit von Signalen einer Sensoranordnung, wobei an dem Ausleger getrennte Hub- und Seiteneinstellungsantriebe zur Verstellung des Auslegers in seiner Höhenlage und seiner seitlichen Schwenkstellung vorgesehen sind, und der Hubantrieb des Auslegers unter Steuerung durch die Sensorsignale im Rahmen eines Regelungskreises steht, dem bei Änderungen des vom Arbeitskopf angetroffenen Widerstandes von der Sensoranordnung eine Störgröße der Regelungsgröße zugeführt wird, auf die der Regelungskreis mit einer entsprechenden Stellgröße zur Korrektur der Höhenstellung des Auslegers durch dessen Hubantrieb reagiert (gemäß dem Oberbegriff des Anspruches 1).

Ausleger-Mähgeräte der vorliegend angesprochenen Bauweise sind seit vielen Jahren erfolgreich im Einsatz und insbesondere bekannt aus der DE-PS 21 59 944. In ihrer ursprünglich angesprochenen Form waren sie mit einer von der Bedienungsperson zu betätigenden Steuerung für die Höhenstellung des Auslegers ausgestattet.

Die im Oberbegriff des Anspruch 1 angesprochene Ausleger-Entlastungsregelung ist Gegenstand der älteren, nicht vorveröffentlichten Patentanmeldung P 44 01 716.2. Bei diesem älteren Gerät, bei welchem das Gehäuse des Arbeitskopfes durch eine im wesentlichen bodenparallele Abrollwalze auf dem Gelände abgestützt ist und zur Beeinflußung des Auflagedruckes der Abrollwalze auf dem Gelände dem Hubzylinder des Auslegers in der Stelleinrichtung ein proportional steuerbares Druckbegrenzungsventil zugeordnet ist, ist vorgesehen, daß zur Abtastung von senkrechten Bewegungen der Abrollwalze eine Wegsensor-Anordnung mit ihrem Tastkopf in direkter Antriebsverbindung mit der Abrollwalze steht. Dabei ist die Abrollwalze in dem Gehäuse des Arbeitskopfes mit ihrer Achse an dem freien Ende einer auskragenden Federstabstahl-Anordnung aufgehängt und steht der Sensor-Tastkopf an der Aufhängungsstelle in Tastberührung mit dem Federstabstahl. Damit wird bei dem älteren Gerät eine selbsttätige und reichweitenunabhängige Konstanthaltung des Auflagedruckes des Mähkopfes erreicht. Auf diese Weise kann bei dem älteren Gerät unabhängig von unterschiedlichen Fahrgeschwindigkeiten und auch Weiteneinstellungen des Auslegers oder auftretenden Leckverlusten in der Hydraulik eine Einstellung des Arbeitsgerätes immer genau auf die gewünschten Bearbeitungsverhältnisse erfolgen, und es besteht nicht die Notwendigkeit ständiger manueller Nachstellung.

Für manche Anwendungsfälle ist es erwünscht, ohne eine Sensoranordnung am Arbeitskopf des Gerätes auszukommen oder auch die Anordnung einer Abrollwalze möglichst einfach ohne Verwendung einer auskragenden Federstabstahl-Anordnung zu gestalten.

Demgemäß liegt der Erfindung die Aufgabe zugrunde, ein fahrbares Ausleger-Arbeitsgerät der in Rede stehenden Art mit einer einfachen Ausleger-Entlastungsregelung auszustatten, welche ohne an dem Arbeitskopf angeordnete Sensoranordnungen auskommt und ggf. auch eine einfache Montage einer Abrollwalze ermöglicht.

Die Lösung der Aufgabe ist im Anspruch 1 gekennzeichnet.

Vorteilhafte Ausgestaltungen und Weiterbildungen der Erfindung sind in den Unteransprüchen gekennzeichnet.

Die Ausgestaltung der Sensoranordnung für die seitliche Schwenkstellung als Schaltnocken- und Endschalter-Anordnung an dem Drehgestell des Auslegers zeichnet sich durch besondere Einfachheit und Robustheit aus und läßt sich entsprechend den jeweiligen baulichen Gegebenheiten mannigfaltig verwirklichen. Auch den jeweiligen Gegebenheiten entsprechende Einstellmöglichkeit und Verstellmöglichkeit läßt sich dabei gut verwirklichen.

Die Sensoranordnung für die Schwenkstellung des Drehgestelles des Auslegers kann gemäß Anspruch 9 aber auch als Druckaufnehmer an dem Schwenkzylinder ausgestaltet sein, und auch optische Sensoranordnungen mit Abtastung von Stellungs-Markierungen sind möglich. Ebenso auch die Ausgestaltung als Wegsensorsystem im Zusammenhang mit dem Verstellweg bei Änderung der Schwenkstellung des Drehgestelles. Dabei können auch hydraulische Schwenkzylinder mit eingebautem Wegsensor Verwendung finden.

Es ist zum Stande der Technik darauf hinzuweisen, daß an Ausleger-Arbeitsgeräten gemäß DE-PS 32 18 525 bereits eine Koppelung zwischen einem hydraulischen Hubzylinder für den Ausleger und einem den Ausleger in seiner seitlichen Schwenkstellung haltenden hydraulischen Zylinder derart vorgesehen ist, daß bei einem durch Widerstand hervorgerufenen Schwenken des Auslegers um seine vertikale Achse und einem damit einhergehenden Ausfahren der Kolbenstange des der Schwenkstellung zugeordneten Hydraulikzylinders der erstgenannte hydraulische Hubzylinder im Sinne eines Hochschwenkens des Auslegers beaufschlagt wird. Diese Anordnung ist als Überlastsicherung wirksam, so daß bei Einwirken von Widerständen auf das Böschungsmähgerät dessen Hauptträger mitsamt dem Böschungsmähgerät ausschwenken kann, um Gerätebeschädigungen zu vermeiden. Sobald der Widerstand fortfällt, kann das Böschungsmähgerät wieder in seine Normalstellung überführt werden. Eine solche Anordnung gestattet jedoch nicht eine ständige Anpassung des Auflagedruckes des Arbeitskopfes entsprechend den sich ständig ändernden Arbeitsbedingungen, wie sie durch sich ändernde Geländeneigung, geänderte Fahrgeschwindigkeit, Änderungen des Widerstandes des Bearbeitungsgutes (dünneres, dikkeres, feuchteres, trockeneres Gras) etc. erzeugt werden.

Es folgt die Beschreibung an Ausführungsbeispielen der Erfindung anhand von Zeichnungen.

Fig. 1 zeigt in Draufsicht ein fahrbares Auslegerarbeitsgerät mit einem Arbeitskopf in Form eines Mähkopfes, der an einem mittels Drehgestell verschwenkbaren Ausleger sitzt.

Fig. 2 zeigt ein solches Gerät von hinten mit seitlich weggestrecktem Mähkopf-Ausleger.

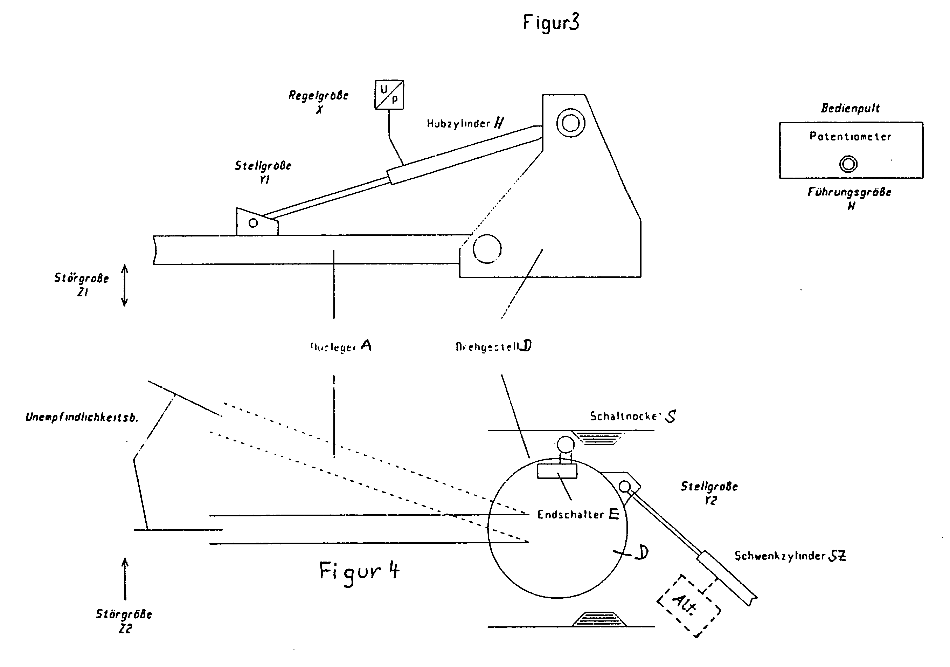

Fig. 3. zeigt eine schematische Teil-Seitenansicht eines Drehgestelles mit Ausleger und Hubzylinder, wobei der Mähkopf von dem Ausleger fortgelassen ist und schematisch die Einflußgrößen eines Regelkreises für die Ausleger-Entlastung angedeutet sind.

Fig. 4 zeigt eine Teildraufsicht auf das Ausleger-Drehgestell gemäß Fig. 3 mit einer Schaltnocken- und Endschalter-Anordnung zur Erfassung von Änderungen des Schwenkwinkels im Drehgestell.

Fig. 5 zeigt ein Blockschaltbild einer Ausleger-Entlastungsregelung auf der Grundlage einer von der Schaltnocken- und Endschalter-Anordnung am Drehgestell als Sensoranordnung ausgesendeten Störgröße.

Fig. 6 zeigt ein schematisches Weg-Zeit-Diagramm, bei welchem untereinander schematisch dargestellt sind

das zeitliche Auftreten einer Störgröße Z2 durch seitliche Verschwenkung des den Mähkopf tragenden Auslegers,
die zeitlichen Abweichungen der Höhenstellung des Mähkopf-Auslegers von dem als Führungsgröße des Entlastungs-Regelungskreises dienenden Sollwert W der Höhenstellung des Mähkopfauslegers,
die damit einhergehenden Korrektur-Stellgrößen Y1 zum Heben und Senken des Hubzylinders des Auslegers und auch die
Korrektur-Stellgröße Y2 zur Rückstellung des Schwenkzylinders in seine Normallage nach zeitweiliger Abweichung

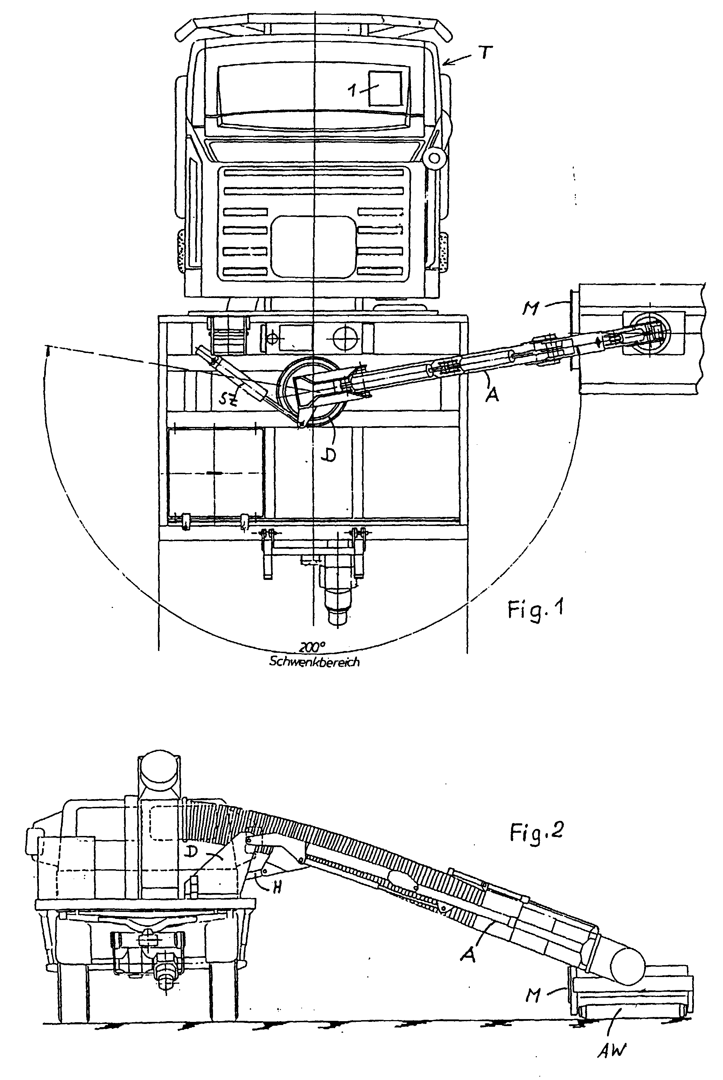

Fig. 1 zeigt ein fahrbares Ausleger-Arbeitsgerät für Unterhaltungsarbeiten im Straßenbereich in Form eines Ausleger-Mähgerätes. An dem Trägerfahrzeug T sitzt ein Ausleger A, der in bekannter Weise einen Mähkopf M trägt. Mittels eines Drehgestelles D und eines Schwenkzylinders SZ kann der Ausleger A mit dem davon getragenen Mähkopf M auf verschiedene Schwenkstellungen eingestellt werden. Für die normale Mäharbeit ist der Ausleger im wesentlichen rechtwinklig seitlich ausgeschwenkt, wobei für eine Bearbeitungsmöglichkeit auf der einen oder anderen Straßenseite ein Schwenkbereich von etwa 200° vorgesehen ist.

Fig. 2 veranschaulicht auch das Drehgestell D für den Ausleger A und auch einen Hubzylinder H mittels dessen der Ausleger A mit dem daran befindlichen Mähkopf M nach Bedarf gehoben oder gesenkt werden kann. Figur 2 läßt auch eine Abrollwalze AW erkennen, mit der der Mähkopf auf dem Gelände abgestützt ist.

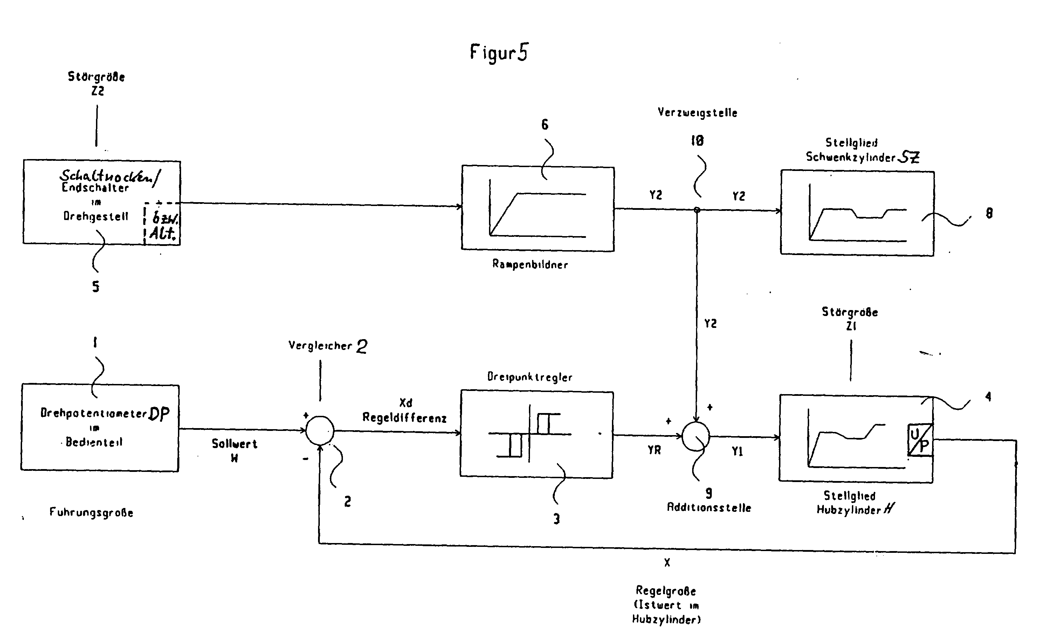

Für bestmögliche Arbeitsweise ist in der unten im einzelnen beschriebenen Weise eine Ausleger-Entlastungsregelung vorgesehen, die mit ihrem in Figur 5 veranschaulichten Regelungskreis dafür sorgt, daß auf der Grundlage eines im Bedienteil 1 mittels eines Drehpotentiometers DP einstellbaren Sollwertes W als Führungsgröße des Regelkreises eine ständige Nachregelung der Höhenstellung des Auslegers A orientiert an dem Sollwert erfolgen kann. Dabei nutzt der Regelungskreis die Signale zwei verschiedener Sensoranordnungen. Die eine Sensoranordnung wird von einem Druckaufnehmer U/P gebildet, der an dem Hubzylinder H des Auslegers A vorgesehen ist und den Istwert des Drukkes im Hubzylinder feststellt, der sich als Regelgröße X des Regelungskreises nach Maßgabe äußerer Einflüsse, wie angetroffener Gelände-Neigungen und auch nach Maßgabe der von dem Regelungskreis für die erforderlichen Korrekturen vorgenommenen Verstellungen des Druckes im Hubzylinder H ändert.

Die andere Sensoranordnung, welche den Regelungskreis beeinflußt, spricht auf Änderungen der Schwenkstellung des Auslegers A an, wie sie sich bei Auftreten erhöhten Mähwiderstandes od. dgl. ergibt, weil solcher erhöhter Widerstand danach trachtet, den Ausleger A und Mähkopf M entgegen der Fahrtrichtung ein Stück zurückfallen zu lassen und damit die Schwenkstellung zu ändern. Zur Feststellung solcher Änderungen der Schwenkstellung des Auslegers ist gemäß Figur 4 eine Anordnung aus Schaltnocken S und Endschalter E vorgesehen. Ändert sich die Drehstellung des Drehgestelles D mit dem daran befindlichen Ausleger A, so kann der Endschalter E auf den Schaltnocken S auflaufen und ein entsprechendes Signal abgeben.

Alternativ zu einer aus Schaltnocken S und Endschalter E bestehenden Sensoranordnung für die Schwenkstellung des Drehgestelles D des Auslegers A können auch Sensoranordnungen in Form eines Druck- oder Wegaufnehmers am Schwenkzylinder SZ oder auch solche mit Abtastung von Stellungsmarkierungen an Drehgestell oder Schwenkzylinder wie in Figur 4 schematisch bei "Alt." angedeutet Verwendung finden.

Der in Figur 5 gezeigte Regelungskreis für die Auslegerentlastung gründet sich auf das von dem Hubzylinder H des Auslegers gebildete Stellglied. In dem Hubzylinder H bildet sich entsprechend der ihm zur Einstellung der Höhenstellung des Auslegers mittels eines hydraulischen Stellventiles zugeführten Hydraulikflüssigkeit ein hydraulischer Druck aus, dessen Ist-Wert mittels des Druckaufnehmers U/P als Sensoranordnung gemessen und durch den Regelungskreis als Regelgröße X verändert wird, wenn bei Änderungen der Höhenstellung des Auslegers aufgrund äußerer Einflüsse eine Störgröße Z1 auftritt. Der mittels des Druckaufnehmers U/P als Sensoranordnung aufgenommene Ist-Wert des hydraulischen Druckes im Hubzylinder wird als Regelgröße X einem Vergleicher 2 zugeführt, dem auch als Führungsgröße der an dem Drehpotentiometer DP im Bedienteil eingestellte Sollwert W zugeführt wird. Der Vergleicher stellt die Regeldifferenz Xd fest, die einem Regler 3 zugeführt und als dessen Ausgangssignal YR einer Additionsstelle 9 zugeleitet wird.

Diese Additionsstelle 9 erhält auch eine Stellgröße Y2 zugeführt, die von einem Rampenbildner 6 abgegeben wird, der seinerseits Eingangssignale von der Sensoranordnung aus Endschalter E und Schaltnocken S (in Figur 5 im Block 5) erhält, wenn daran aufgrund geänderter Schwenkstellung des Drehgestelles D eine Störgröße Z2 auftritt.

Die von dem Rampenbildner 6 auf der Grundlage der Sensoranordnung 5 aus Schaltnocken SZ und Endschalter E gebildete Stellgröße Y2 wird an der Verzweigstelle 10 auch zu einem Stellglied 8 des Schwenkzylinders S geleitet, um aufgetretene Änderungen der Schwenkstellung des Drehgestelles D des Auslegers zu korrigieren und den Ausleger in seine Normallage zurückzustellen.

Die vorliegende Ausleger-Entlastungsregelung stellt eine Kombination von Steuerung und Regelung dar, bei der eine Aufschaltung von mittels Sensoranordnung festgestellten Störgrößen erfolgt. Ist durch die Sensoranordnung U/P am Hubzylinder H für die Höhenstellung des Auslegers eine Störgröße Z1 nicht meßbar, läßt sich der Regelkreis durch eine zusätzliche Steuerkette mit Einbeziehung der Sensoranordnung (Schaltnocken S - Endschalter E) für die Schwenkstellung des Drehgestelles D beeinflussen. Durch das Aufschalten der Störgröße Z2 dieser Sensoranordnung über einen Rampenbildner 6 auf die Stellgröße am Ausgang YR des Reglers 3 wird durch die resultierende Stellgröße Y1 der eigentliche Störeinfluß ausgeglichen.

Zusammenfassend läßt sich die Arbeitsweise der Ausleger-Entlastungsregelung wie folgt darstellen:

Der Sollwertgeber W (Drehpotentiometer) gibt den Wert an, der in der Regelstrecke erreicht werden soll.

Sowohl der Sollwert W als auch der Istwert X werden zum Vergleich der Vergleichsstelle 2 zugeführt und daraus die Differenz gebildet

$$Xd = W - X.$$

Die so gewonnene Regeldifferenz Xd = W-X gibt den Unterschied und die Richtung für Heben/Senken des Auslegers A an.

Der Dreipunktregler 3 kann drei Schaltzustände einnehmen

a) Unter Sollwert:
X < W : Ausgangsgröße a (Heben)

o) X in der Unempfindlichkeitszone: : Ausgangsgröße 0
b) Über-Sollwert:
X > W : Ausgangsgröße b (Senken)

Der Regler 3 hat die Aufgabe das Regeldifferenzsignal zu verstärken und zu formen, so daß es weiter als Stellgröße Y1 am Eingang der Regelstrecke 4 das Stellglied (Hubzylinder H Heben/Senken) betätigen kann.

Dieser Signalkreislauf vom Ausgang der Regelstrecke 4 über die Vergleichsstelle 2 Regeleinrichtung 3 zum Stellglied am Eingang der Regelstrecke ist so lange wirksam, bis der Istwert X sich in der Unempfindlichkeitszone von Sollwert W befindet.

Eine große Unempfindlichkeitszone führt zu einem stabilen Regelvorgang, kann aber eine große bleibende Regelabweichung hervorrufen.

Ist die Unempfindlichkeitszone zu klein, dann ergeben sich zwar kurze Regelzeiten, aber der Regelvorgang kommt nur langsam zur Ruhe oder wird sogar instabil.

Die Störgröße Z1 (Ausleger-Höhenstellung, wie erfaßt) macht sich an der Meßstelle für die Regelgröße X bemerkbar. Der Meßwert der Regelgröße korrigiert die Regeldifferenz Xd. Wird dadurch die Unempfindlichkeitszone über- bzw. unterschritten, erfolgt die Korrektur der Stellgröße Y1.

Die Störgröße Z2 (erfaßte Änderung der Schwenkstellung des Drehgestelles) wird durch den Endschalter E der Sensoranordnung 5 im Drehgestell erfasst.

Außer der Regelgröße X für die Höhenstellung des Auslegers erfasst man somit die Störgröße Z2 für die Schwenkstellung des Drehgestelles und führt sie über den als Integrierglied wirkenden Rampenbildner 6, dem Regelkreis zu.

Ändert sich die Störgröße Z2 gemäß Änderung der Schwenkstellung des Drehgestelles, so macht sich deren neuer Wert am Reglereingang 3 bemerkbar und veranlaßt (wenn Unempfindlichkeitszone über- bzw. unterschritten) eine Änderung der Stellgröße Y1.

Durch die Störgröße Z2 erfolgt über den Rampenbildner 6 eine direkte Beeinflussung der Stellgröße Y2 bzw. des Stellgliedes 8 am Schwenkzylinder SZ für die Drehstellung des Auslegers.

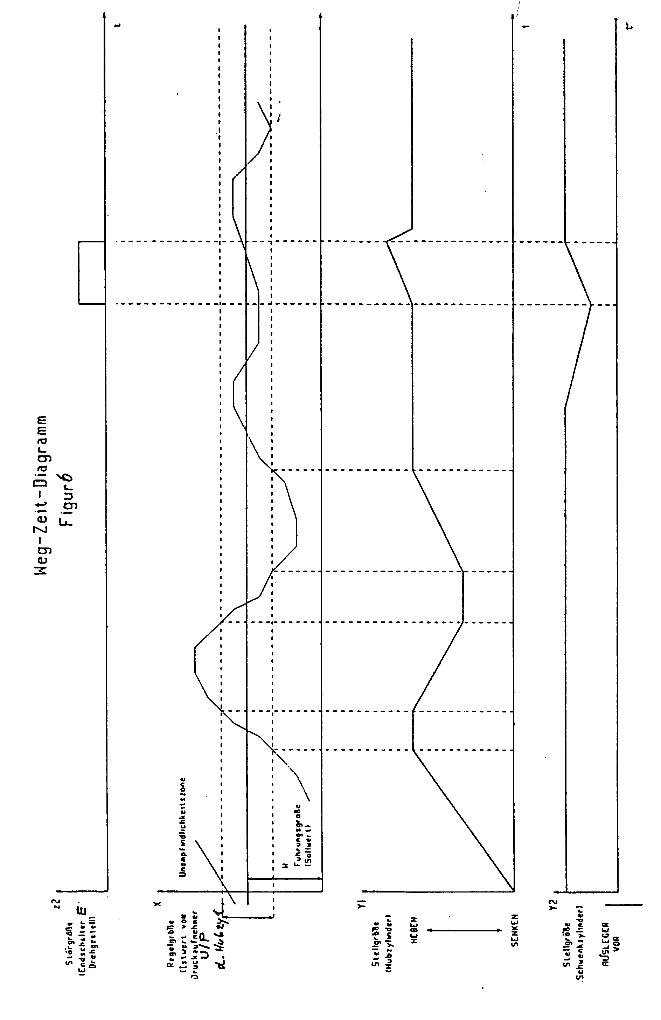

Das Wegzeit-Diagramm der Figur 6 veranschaulicht, wie der kombinierte Steuerungs- u. Regelungsvorgang für die Auslegerentlastung mittels der vorstehend erläuterten Vorrichtung abläuft. Dabei ist im oberen Bereich des Weg-Zeitdiagrammes das Auftreten einer Störgröße Z2 an der aus Schaltnocken S und Endschalter E bestehenden Sensoranordnung und darunter die Auswirkung mit einem Anheben des Hubzylinders H für den Ausleger dargestellt. Auch die Rückführung des zeitweilig verstellten Auslegers A in seine Normallage ist im unteren Bereich des Wegzeit-Diagrammes gezeigt.

Im zweiten Abschnitt des Wegzeit-Diagrammes von oben ist die Unempfindlichkeitszone des als Sensoranordnung dienenden Druckaufnehmers U/P des Hubzylinders veranschaulicht, und darunter sieht man die resultierenden Bewegungen des Hubzylinders zum Heben und Senken des Auslegers A für die erforderliche Entlastung.

Die für die kombinierte Steuerung und Regelung der Auslegerentlastung gemäß der vorliegenden Erfindung verwendeten Komponenten sind handelsüblich erhältliche Bauelemente.

Geeignete handelsübliche Komponenten sind folgende:

| | |
|---|---|
| Druckaufnehmer: | Typ 2000-G, 0-10V Ausgangsspannung Meßbereich 0-250 bar v. IMO, Reichelsheim |
| Dreipunktregler: | von MAN Technologie AG (MANTRONIC) |
| Stellglieder: | von DANFOSS Proportional-Ventile |

**Patentansprüche**

1. Fahrbares Ausleger-Arbeitsgerät für Unterhaltungsarbeiten im Straßenbereich, insbesondere Ausleger-Mähgerät mit einer Vorrichtung zur Ausleger-Entlastungsregelung entsprechend Änderungen des vom Arbeitskopf, insbesondere Mähkopf (M) angetroffenen Widerstandes in Abhängigkeit von Signalen einer Sensoranordung, wobei an dem Ausleger (A) getrennte Hub- und Schwenkantriebe zur Verstellung des Auslegers in seiner Höhenlage und seiner seitlichen Schwenkstellung vorgesehen sind, und der Hubantrieb des Auslegers unter Steuerung durch die Sensorsignale im Rahmen eines Regelungskreises steht, dem bei Änderungen des vom Arbeitskopf angetroffenen Widerstandes von der Sensoranordnung eine Störgröße der Regelungsgröße zugeführt wird, auf die der Regelungskreis mit einer entsprechenden Stellgröße zur Korrektur der Höhenstellung des Auslegers durch dessen Hubantrieb reagiert **dadurch** gekennzeichnet, daß der Regelungskreis für die Ausleger-Entlastung eine auf Änderungen der seitlichen Schwenkstellung des Auslegers (A) mit einer Störgröße (Z2) reagierende Sensoranordnung (5 bzw. Alt.) aufweist, sowie eine weitere Sensoranordnung (U/P) am Hubzylinder (H), die auf Änderungen der Höhenstellung des Auslegers mit einer Störgröße (Z1) reagiert, wobei in Abhängigkeit der Störgrößen (Z1 und Z2) zwei Stellgrößen (Y1 und Y2) erzeugt werden, deren eine (Y1) dem Stellglied Hubantrieb (H) für die Auslegerentlastung zugeführt wird, während die andere Stellgröße (Y2) dem Stellglied Schwenkantrieb (SZ) zur Einstellung des Auslegers in seine seitliche Normallage zugeführt wird.

2. Ausleger-Arbeitsgerät nach Anspruch 1, **dadurch** gekennzeichnet, daß eine Sensoranordnung (S,E) zum Abtasten der Stellung eines Drehgestelles (D) des Auslegers (A), insbesondere eine Schaltnocken- und Endschalter-Anordnung (S,E) vorgesehen ist, und auf Änderungen der seitlichen Schwenkstellung des Auslegers mit entsprechender Störgröße (Z2) reagiert.

3. Ausleger-Arbeitsgerät nach Anspruch 1 oder 2, **dadurch** gekennzeichnet, daß eine Additionsstelle (9) zum Überlagern bzw. Aufschalten eines Signales (Y2) des Endschalters (E) für die Drehgestellstellung mit dem Ausgangssignal (YR) eines Reglers (3) vorgesehen ist, der eingangsseitig eine Regeldifferenz (xd) zugeführt bekommt, die ein Vergleicher (2) aus einem bedienungsseitig einstellbaren Sollwert (W) für die Auslegerhöhenstellung und einer Regelgröße (X) bildet, die mittels eines Druckaufnehmer (U/P) am Hubzylinder (H) des Auslegers (A) aufgenommen ist, wobei die Additionsstelle (9) die Stellgröße (Y1) zur Korrektur der Höhenstellung des Hubzylinders (H) abgibt.

4. Ausleger-Arbeitsgerät nach Anspruch 3, **dadurch** gekennzeichnet, daß daß der Regler (3) ein Dreipunktregler ist, der entsprechend drei Schaltzuständen nach Maßgabe der Regeldifferenz (xd) eine Ausgangsgröße (a) zum Heben des Auslegers (A), eine Ausgangsgröße (o) in einer Unempfindlichkeitszone und eine Ausgangsgröße (b) zum Senken des Auslegers (A) abgibt.

5. Ausleger-Arbeitsgerät nach Anspruch 4, **dadurch** gekennzeichnet, daß der Schaltnocken (S) an dem Drehgestell (D) einen Normalstellungsbereich der Schwenkstellung des Auslegers (A) überdeckt, bei dessen Verlassen der Endschalter (E) schaltet und die Störgröße (Z2) aussendet.

6. Ausleger-Arbeitsgerät nach einem oder mehreren der voranstehenden Ansprüche, **dadurch** gekennzeichnet, daß das Stellsignal (Y1) für die Höhenstellung des Auslegers einem hydraulischen Stellventil des Hubzyliders (H) zugeführt wird.

7. Ausleger-Arbeitsgerät nach einem oder mehreren der voranstehenden Ansprüche, **gekennzeichnet** durch

ein Drehpotentiometer (DP) am Bedienungsteil.

8. Ausleger-Arbeitsgerät nach einem oder mehreren der Ansprüche 3 - 7, **dadurch** gekennzeichnet, daß die Stellgröße (Y2) dem Ausgangssignal der Sensoranordnung (5 bzw. Alt.) für die Schwenkstellung des Ausleger-Drehgestelles (D) mittels eines Rampenbildners (6) gebildet ist.

9. Ausleger-Arbeitsgerät nach einem oder mehreren der voranstehenden Ansprüche, **dadurch** gekennzeichnet, daß als Sensoranordnung für die seitliche Schwenkstellung des Auslegers statt eines Endschalters ein an einem Schwenkzylinder (SZ) des Drehgestelles vorgesehener Druckaufnehmer (Alt.) dient.

**Claims**

1. A mobile boom implement for maintenance operations in relation to roads, in particular a boom mowing implement with a device for boom load relief regulation in accordance with changes in the resistance encountered by the working head, in particular a mowing head (M), in dependence on signals from a sensor arrangement, wherein provided at the boom (A) are separate lifting and pivoting drives for displacement of the boom in respect of its heightwise position and its lateral pivotal position, and the lifting drive of the boom is under the control of the sensor signals within the framework of a regulating circuit to which, in the event of changes in the resistance encountered by the working head, the sensor arrangement feeds a disturbance variable in respect of the regulating parameter, to which the regulating circuit reacts with a corresponding setting parameter for correction of the heightwise position of the boom by means of the lifting drive thereof, characterised in that the regulating circuit for boom load relief has a sensor arrangement (5 or Alt.) which reacts to changes in the lateral pivotal position of the boom (A) with a disturbance variable (Z2), and a further sensor arrangement (U/P) at the lift cylinder (H), which reacts to changes in the heightwise position of the boom with a disturbance variable (Z1), wherein in dependence on the disturbance variables (Z1 and Z2), there are produced two setting parameters (Y1 and Y2) of which one (Y1) is fed to the setting member lifting drive (H) for boom load relief while the other disturbance variable (Y2) is fed to the setting member pivotal drive (SZ) for setting the boom into its lateral normal position.

2. A boom implement according to claim 1 characterised in that there is provided a sensor arrangement (S, E) for sensing the position of a rotary mounting structure (D) of the boom (A), in particular a switching cam and limit switch arrangement (S, E), and it reacts to changes in the lateral pivotal position of the boom with a corresponding disturbance variable (Z2.

3. A boom implement according to claim 1 or claim 2 characterised in that there is provided an addition location (9) for superimposition on or addition to a signal (Y2) of the limit switch (E) for the rotary mounting structure position with the output signal (YR) of a regulator (3) which at the input side receives a regulating difference (xd) which is formed by a comparator (2) from a reference value (W) which can be set at the operator end for the boom heightwise position and a regulating parameter (X) which is detected by means of a pressure pick-up (U/P) at the lift cylinder (H) of the boom (A), wherein the addition location (9) outputs the setting parameter (Y1) for correction of the heightwise position of the lift cylinder (H).

4. A boom implement according to claim 3 characterised in that the regulator (3) is a three-point regulator which corresponding to three switching states in accordance with the regulating difference (xd) outputs an output parameter (a) for lifting of the boom (A), an output parameter (o) in an insensitivity zone and an output parameter (b) for lowering of the boom (A).

5. A boom implement according to claim 4 characterised in that the switching cam (S) on the rotary mounting structure (D) covers a normal position range of the pivotal position of the boom (A), upon a departure from which the limit switch (E) switches and emits the disturbance variable (Z2).

6. A boom implement according to one or more of the preceding claims characterised in that the setting signal (Y1) for the heightwise position of the boom is fed to a hydraulic setting valve of the lift cylinder (H).

7. A boom implement according to one or more of the preceding claims characterised by a rotary potentiometer (DP) at the operating station.

8. A boom implement according to one or more of claims 3 to 7 characterised in that the setting parameter (Y2) is formed from the output signal of the sensor arrangement (5 or Alt.) for the pivotal position of the boom rotary mounting structure (D) by means of a ramp-forming device (6).

9. A boom implement according to one or more of the preceding claims characterised in that instead of a limit switch a pressure pick-up (Alt.) provided at a pivotal cylinder (SZ) of the rotary mounting structure serves as the sensor arrangement for the lateral pivotal position of the boom.

## Revendications

1. Appareil de travail à bras porteur mobile pour travaux d'entretien sur la chaussée, en particulier, une faucheuse avec un dispositif pour le réglage de la décharge du bras porteur, en fonction des modifications de la résistance rencontrée par la tête de travail, en particulier par la tête faucheuse (11), en fonction de signaux d'un dispositif à capteurs, sur le bras porteur (1), des entraînements de levage et de basculement étant prévus pour le déplacement du bras porteur dans sa position en hauteur et sa position latérale de pivotement et l'entraînement de levage du bras porteur étant commandé par les signaux de capteurs dans le cadre d'un circuit de réglage qui reçoit au moment des modifications de la résistance appliquée à la tête de travail une grandeur perturbatrice de la grandeur de réglage envoyée par le dispositif à capteur, grandeur à laquelle réagit le circuit de réglage avec une grandeur de réglage correspondante pour la correction de la position en hauteur du bras porteur par son entraînement de levage, caractérisé en ce que le circuit de réglage présente pour la décharge du bras porteur 'a) un dispositif à capteur (5 respectivement Alt.) réagissant à des modifications de la position en hauteur du bras porteur par une grandeur perturbatrice (Z2), présente également un autre dispositif à capteur (U/ P) sur le vérin de levage (H) qui réagit aux modifications de la position en hauteur du bras porteur par une grandeur perturbatrice (Z1), en fonction des grandeurs perturbatrices (Z1 et Z2) deux grandeurs de réglage (Y1 et Y2) étant générées dont l'une (Y1) est amenée à l'organe de réglage, entraînement de levage (H) pour la décharge du bras porteur, tandis que l'autre grandeur de réglage (Y2) est amenée à l'organe de réglage, entraînement pivotant (SZ), pour le réglage du bras porteur dans sa position latérale normale.

2. Appareil de travail à bras porteur selon la revendication 1, caractérisé en ce qu'un dispositif à capteur (S, E) est prévu pour le balayage de la position d'un bâti tournant (D) du bras (A), en particulier un dispositif (S, E) d'interrupteur de fin de course et de came de commande (S, E) qui réagit à des modifications de la position de pivotement latérale du bras par une grandeur perturbatrice correspondante (Z2).

3. Appareil de travail à bras porteur selon la revendication 1 ou 2, caractérisé en ce qu'un point d'addition (9) est prévu pour la superposition respectivement l'accumulation d'un signal (Y2) de l'interrupteur de fin de course (E) pour la position du bâti tournant avec le signal de sortie (YR) d'un régulateur (3), qui reçoit côté entrée une différence de réglage (xd) qui forme un système de comparaison (2) entre la valeur de consigne (W) réglable côté opérateur pour la position en hauteur du bras et une grandeur de réglage (X) qui est absorbée au moyen d'un absorbeur de pression (U/P) sur le vérin de levage (H) du bras (A), le point d'addition (9) délivrant la grandeur de réglage (Y1) pour la correction de la position en hauteur du vérin de levage (H).

4. Appareil de travail à bras porteur selon la revendication 3, caractérisé en ce que le régulateur (3) est un régulateur par plus ou moins qui délivre selon trois états de commande à la détermination de la différence de réglage (xd), une grandeur de sortie (a) pour le levage du bras (A), une grandeur de sortie (o) dans une zone d'insensibilité et une grande de sortie (b) pour l'abaissement du bras (A).

5. Appareil de travail à bras porteur selon la revendication 4, caractérisé en ce que la came de commande (S) recouvre sur le bâti tournant (D) une zone de position normale de la position de pivotement de l'arbre (A), en ce qu'au moment où le bras quitte cette zone de position, l'interrupteur de fin de course (E) se déclenche et émettant la grandeur perturbatrice (22).

6. Appareil de travail à bras support selon une ou plusieurs des revendications précédentes, caractérisé en ce que le signal de réglage (Y1) pour la position en hauteur du bras porteur est amené à une soupape de réglage hydraulique du vérin de levage (H).

7. Appareil de travail à bras support selon une ou plusieurs des revendications précédentes, caractérisé par un potentiomètre rotatif (DP) sur la partie de commande.

8. Appareil de travail à bras support selon une ou plusieurs des revendications 3 - 7, caractérisé en ce que la grandeur de réglage (Y2) forme le signal de sortie du dispositif à capteur (5 respectivement Alt.) pour la position de pivotement du bâti tournant (D) du bras porteur au moyen d'une formation de rampe (6).

9. Appareil de travail à bras support selon une ou plusieurs des revendications précédentes, caractérisé en ce qu'en tant que dispositif à capteurs pour la position latérale de pivotement du bras à la place d'un interrupteur de fin de course, on se sert d'un absorbeur de pression (Alt.) prévu sur un vérin de pivotement (SZ) du bâti tournant.

Fig. 1

200°
Schwenkbereich

Fig. 2

Figur3

Bedienpult

Regelgröße
X

U/p

Hubzylinder *H*

Potentiometer

Stellgröße
Y1

Führungsgröße
W

Störgröße
Z1

10

EP 0 722 654 B1

Ausleger *A*

Drehgestell *D*

Unempfindlichkeitsb.

Schaltnocke *S*

Stellgröße
Y2

Endschalter *E*

*D*

Schwenkzylinder *SZ*

Figur 4

Aut

Störgröße
Z2

Figur 5

Störgröße
Z2

Schaltnocken/
Endschalter
im
Drehgestell  | bzw.
| Alt.

5

Drehpotentiometer DP
im
Bedienteil

Führungsgröße

1

Sollwert
W

Vergleicher 2

+

−

2

Xd
Regeldifferenz

Dreipunktregler

3

6

Rampenbildner

Verzweigstelle

10

Y2          Y2

Y2

YR

+

+

9
Additionsstelle

Y1

Stellglied
Schwenkzylinder SZ

8

Störgröße
Z1

Stellglied
Hubzylinder H

U/P

4

X

Regelgröße
(Istwert im
Hubzylinder)

EP 0 722 654 B1

Weg-Zeit-Diagramm
Figur 6